Europäisches Patentamt

(19) European Patent Office

Office européen des brevets

(11) Publication number: **0 045 999**

**A1**

# (12) EUROPEAN PATENT APPLICATION

(21) Application number: **81200895.1**

(22) Date of filing: **07.08.81**

(51) Int. Cl.³: **A 22 C 7/00**

(30) Priority: **11.08.80 NL 8004552**

(43) Date of publication of application:
**17.02.82 Bulletin 82/7**

(84) Designated Contracting States:
**AT BE CH DE FR GB IT LI SE**

(71) Applicant: **Dijkstra, Jan**
**Viaductstraat 2,**
**NL-9561 AA Ter Apel(NL)**

(72) Inventor: **Dijkstra, Jan**
**Viaductstraat 2,**
**NL-9561 AA Ter Apel(NL)**

(74) Representative: **de Wit, Gerard Frederik, Ir. et al,**
**Breitnerlaan 146**
**NL-2596 HG Den Haag(NL)**

(54) Device and method for mechanically treating animal pieces, especially for preparing so-called schnitzels such as veal collops.

(57) A pneumatic press for reducing in a considerable way the thickness of animal pieces such as veal collops, of so-called schnitzels, the press being provided with a pneumatic drive (1) having choke means for gradually increasing the pressure. Preferably the press is provided with auxiliary means (12, 13, 14, 16, 17, 18, 19) for needling, cutting or shaping animal pieces.

./...

EP 0 045 999 A1

Croydon Printing Company Ltd.

FIG.1

**0045999**

Device and method for mechanically treating animal pieces, especially for preparing so-called schnitzels such as veal collops.

The invention relates to a device and method for mechanically treating meat, especially for preparing so-called schnitzels such as veal collops.

In this specification meat means every type of animal flesh for consumptive purposes and consequently is used in a way that replaces porc, lamb, big and small game and so on.

A so-called "schnitzel", originally a "Wiener Schnitzel" is nowadays a popular form of meat or porc corresponding to the well known veal collop. A schnitzel is prepared by considerably reducing the thickness of a piece of flesh for instance from 20 mm to about 5 to 3 mm. Also rump steaks are often prepared by considerably reducing the thickness of a piece of meat.

Normally this is done by hand by striking a piece of meat or suchlike with a suitable instrument such as a chopper on a chopper block in a butcher's shop. This work is time consuming and necessitates physical force and skill.

When preparing schnitzels from a fillet with removed membranes it is usual to cut the slices from which the schnitzels have to be made in planes perpendicular to the grain. Herewith the difficulty occurs that the last slices are unsuitable for making schnitzels because of the presence of a big sinew which seriously hampers the usual chopping treatment and the preparation of a schnitzel.

For making small schnitzels and/or other preshaped animal pieces such as beef or veal olives it is possible to cut the fillet at the location of the sinew in a direction parallel to the grain. Nevertheless the disadvantage that no schnitzels can be made from this portion of the fillet still occurs.

A further disadvantage of the normal way of handing is, that at the edge ravels occur, which means a loss of veal, meat or suchlike.

Further in practice it is less hygienic to prepare schnitzels on the chopper block because all types of flesh or meat and so on of the butcher's shop can come on this block and it is possible that some sort are stronger infected than the meat or suchlike normally used for making schnitzels, so that the latter obtain worse keeping qualities.

Veal, meat or porc for preparing schnitzels is devided in five classes: normal, weak, sticky, hard and stringy. So-called normal flesh or meat can well be used for preparing schnitzels perpendicular to the grain and weak flesh material even very well. Sticky flesh material can only difficultly be used for preparing schnitzels, because it will stick. Hard veal or meat hardly can be used for schnitzels because it splinters with the usual treatment for preparing schnitzels. Stringy flesh material can only difficultly be used for preparing schnitzels because it needs much force and the result is crumbly.

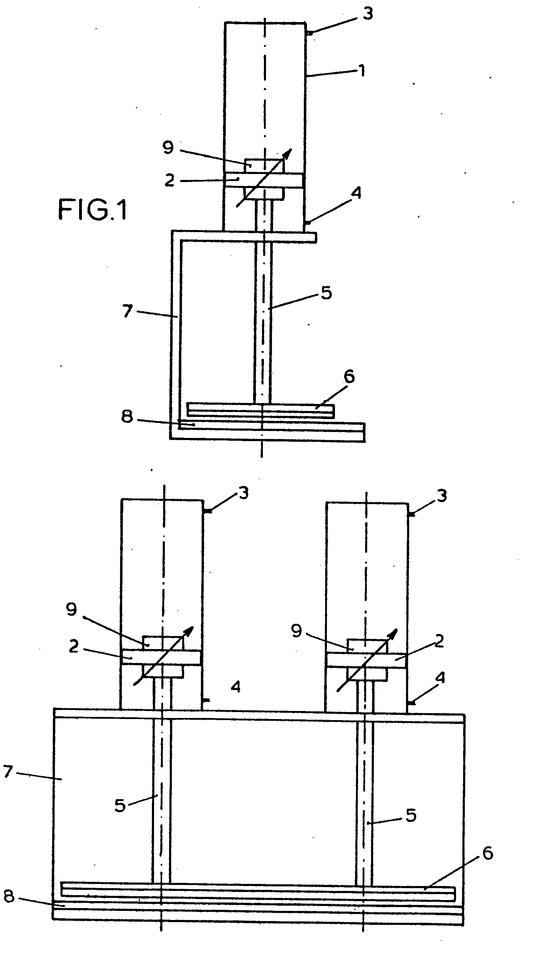

The United States Patent Specification 2,688,151 to Komarik and Carroll describes a hydraulic device for pressing animal pieces and needling them in order to render them tender. The pressing operation is only intended for a relatively small reduction of the piece's thickness, as is clear from fig. 1, which shows also that the press surfaces are parallel to the grain. Preparing schnitzels is not possible with this device, the main purpose of which is needling the animal pieces. A hydraulic cylinder develops its maximum force almost immediately, which also is less favourable.

The invention aims to provide a device that is able to prepare acceptable schnitzels and veal collops or other in thickness reduced animal pieces, with which it is possible to use a starting flesh that up till now gave rise to difficulties, such as sticky, hard or stringy flesh, with considerably better results than hitherto was possible.

Further the invention aims to prepare schnitzels and other animal pieces of reduced thickness of very good quality at a high speed without needing special skill or physical force.

Accordingly the invention provides a device for mechanical reducing the thickness of animal pieces provided with two members having each a mainly plane surface, said surface being movable towards each other and away from each other and a drive for this movement characterized in that in order to allow a considerable reduction in thickness of the animal pieces without hitting them too fast the drive is a pneumatic one, the forward stroke of which is provided with choke means so that said pneumatic drive exerts an increasing pressing force having a predetermined upper limit.

Because the force exerted on the animal piece is limited and grows only gradually it is prevented that the animal piece is fragmented. It has been shown that with the invention schnitzels, veal collops, rump steaks and other shaped animal pieces such as meat, veal porc, big game, small game and so on can be prepared quickly without human physical force, or special skill at a higher speed tham up till now was possible and under use of raw material qualities that up till now did give only less favourable results. For preparing schnitzels it is found that a maximum pressing force of 1250 kpf (12500 N) for each schnitzel gives a favourable result, the pressing stroke being carried out in about 0,5 to 0,7 sec. and the animal piece being pressed from about 5 cm x 7 cm = 35 $cm^2$ to about 10 cm x 12 cm = 120 $cm^2$, which means a reduction of thicknes to 35/120 = 0,3 times the original thickness.

According to a further elaboration of the invention it is provided that distance ribs are provided on one of said plane surfaces or that in one of said surfaces a mainly plane excavation is made the shape of which corresponds to a desired final shape of an animal piece.

Herewith the result is obtained that the end of the forward stroke is well defined and consequently the final thickness of the piece. Further the end shape of the piece is more or less defined and it is prevented that small pieces are pressed too strongly. Also with a piece that inadvertently is too big the final thickness is well defined, because any part that lies on top of the ribs (or outside the excavation) has so small an area, that it cannot withstand the pressing force, so that the end position of the pressing members is only very little altered. Ribs or excavations have the additional advantage to define the location where a piece to be treated has to be laid down. If such a piece is not well positioned, its position will be corrected during the forward stroke of the pressing members, because the piece, when pressed against a rib or a side of an excavation will "flow" a little in the opposite direction.

In order to prepare products of different shapes and/or dimensions it is preferred that the pressing member having ribs or excavations is exchangeable.

A further advantage of the invention is, that it is possible that animal pieces, which are together located in an excavation on or between ribs may cohere. This occurs because the protein that is squeezed out somewhat behaves as a glue, so that it is possible to unite smaller pieces without using a binding agent, which normally influences the taste of the piece.

The invention in the following is elucidated on hand of the accompanying drawings, in which

figure 1 schematically shows a side and front view of a device according to the invention;
figure 2 is a plane and a side view of a support plate
according to an embodiment of the invention;
figure 3 is a plane and side view of another preferred
embodiment of a support plate according to the invention;
figure 4 is an end and a side view of an auxiliary
member for rendering meat more tender;
figure 5 shows an auxiliary member for cutting flesh in
cubes for soup meat; and
figure 6 shows a side view and a cross section over the
line VI-VI of a plate for making preshaped objects of
meat, porc, veal and so on.

In fig. 1 reference 1 indicates one of two pneumatic cylinders in
which a piston 2 can move up and down by means of compressed
air admitted by ducts 3 and 4. To piston 2 a pistonrod 5
is connected which at its lower end bears a press member 6.
In a fixed frame 7, that guides the pistonrod 5, a support
plate 8 is removably mounted.

For regulating the forward stroke schematically a choke
and control device 9 has been shown, which is known per se
and can cooperate with control and adjusting members (not
shown) which may be mounted to the cylinder.

When air is admitted to the cylinder a controlled movement
of the piston 2 will take place until the press member 6
cooperates with a piece of meat (not shown) that is laid on
the support plate and that is subjected to a pressing force
gradually rising and remaining below an upper limit defined
by the cylinder and the piston dimensions and the air
pressure. By reason of this a relatively fast but never
shockwise occurring force is exerted on the piece of meat
or suchlike, which allows to prepare good schnitzels. In
practice has been shown that about two or three times as
many schnitzels can be prepared in comparison with a skilled
man working by hand, whereas the work is much lighter.

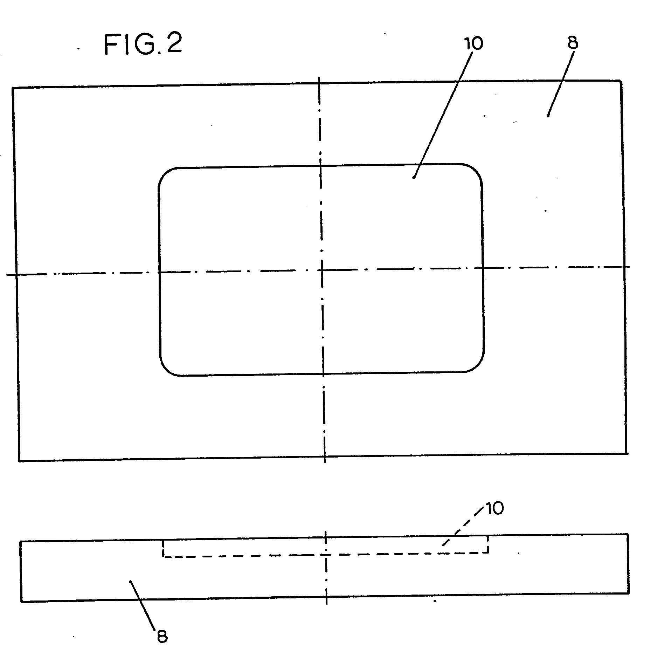

In fig. 2 a preferred embodiment of the support plate 8 has
been shown, in which a plane excavation has been made. This excavation has such dimensions that it amply can contain a schnitzel, whereas the depth of the excavation, for instance 3-5 mm corresponds to the desired thickness of a schnitzel.

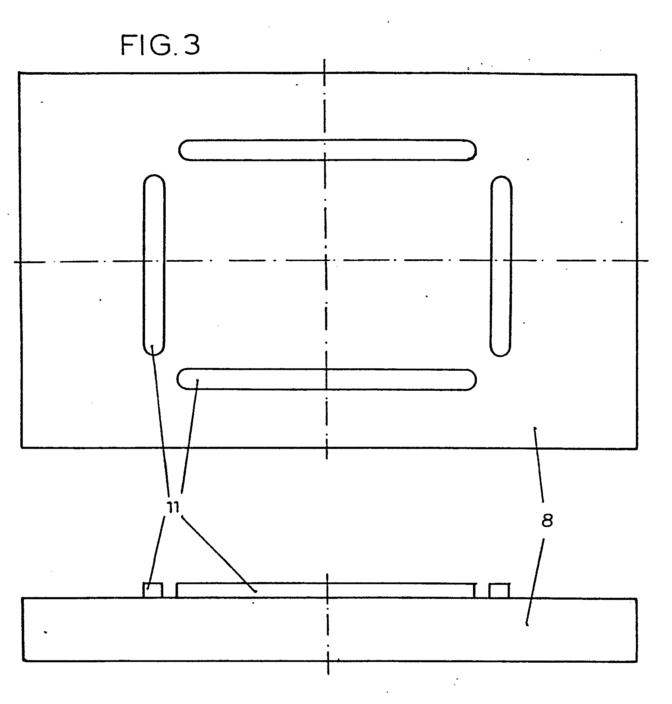

In fig. 3 another embodiment of the support plate 8 has been shown, with which ribs 11 have been applied to it, which have a height, that corresponds to the desired thickness of a schnitzel.

If one wants to press meat to products of a predetermined shape it is possible to give the excavation of fig. 2 this shape. Herewith immediately a final product of the desired appearance is obtained. Furthermore surprisingly it has been shown that a sufficient bonding between different animal pieces is possible when applying the invention, if the volume of the plane excavation 10 corresponds about to the volume of the meat to be pressed therein.

The device according to the invention can in a simple way be adapted for rendering meat more tender in the way known from the earlier cited United States Patent Specification 2,688,151.

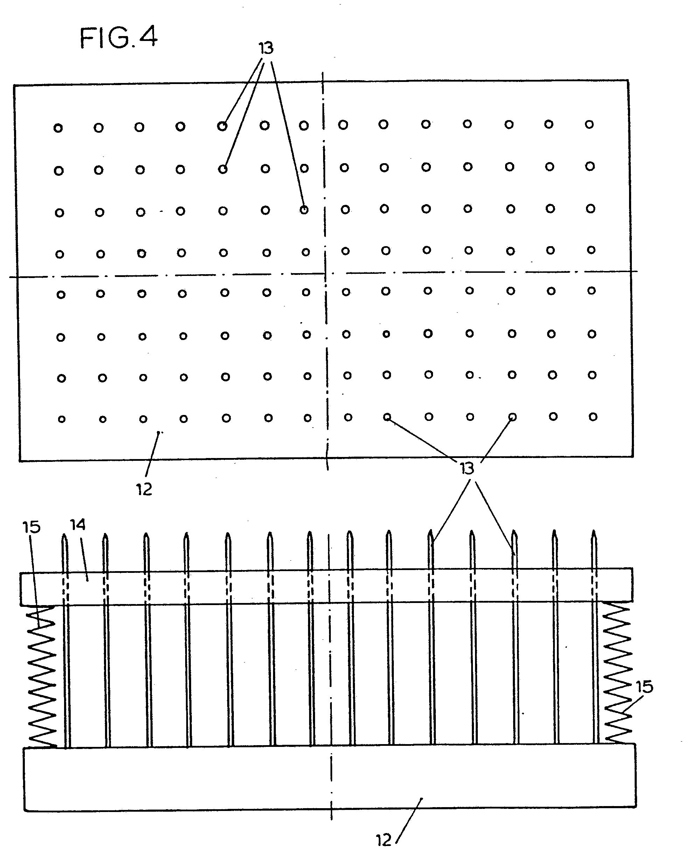

For this purpose the auxiliary member shown in fig. 4 is with its plate 12 attached to the press member 6. The plate 12, which preferably is made of plastic material supports pins 13 fixedly mounted to it. A stripping plate 14, that can slide on these pins is submitted to the action of springs 15. When using this auxiliary member the regulating device 9 is adjusted in such a way, that the pins 13 at the end of the forward stroke of the press member 6 just do not touch the support plate 8, whereas the springs 15 are selected in such a way that the stripping plate 14 strips the meat or suchlike material from the pins 13 without itself leaving these pins.

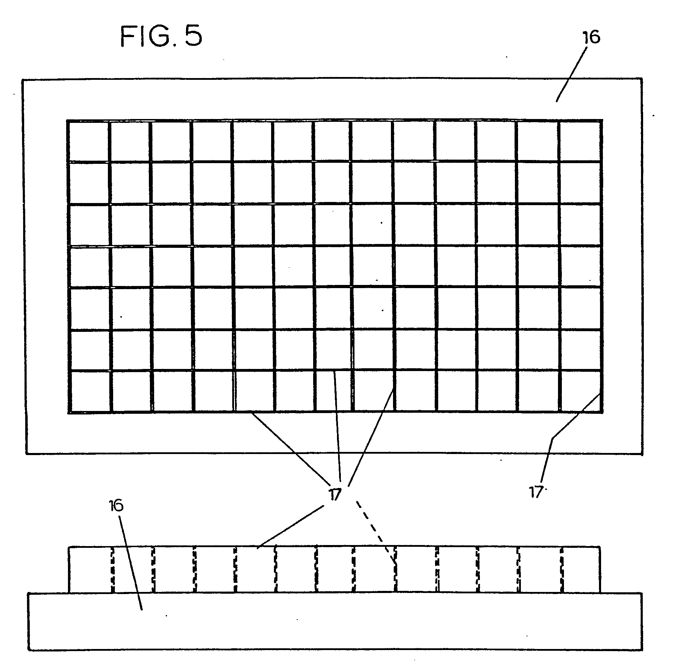

Fig. 5 shows an auxiliary member having a mounting plate 16 that can be attached to the press member 6 and is provided with knives 17 that cross each other. The meat or suchlike material can be removed from the locations between the knives by making the return stroke of the press member partly shockwise.

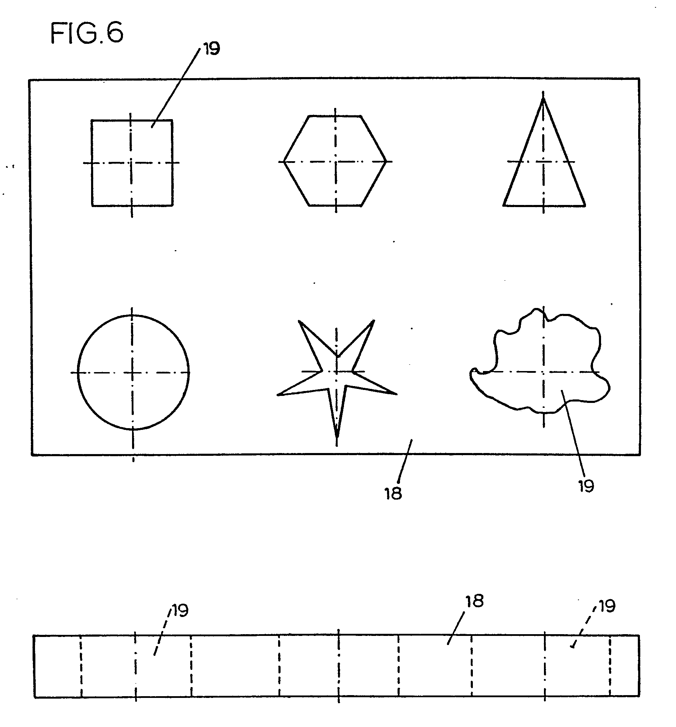

Fig. 6 shows a plate 18 that can be laid on the plate 8. Plate 18 is provided with openings 19 that may have an arbitrary shape. In these openings animal pieces, minced meat or another flesh product is laid, after which press member 8 presses them into the desired shape.

The invention also provides a method for preparing products of meat or suchlike material, where-with one or more pieces are reduced in thickness. Therewith the method gives all the advantages described in the above with respect to the device and also better results with respect to use available meat or suchlike material more completely and better, wherewith for instance a reduction of waste with 60% of what can be obtained when making schnitzels in the usual way is possible. This method consists in that for treating animal pieces such a piece is pressed between two plates in order to reduce its thickness, one of said plates being driven characterized in that the drive is a pneumatic one and that the pressed medium of the pneumatic drive is choked in such a way that the pressing force is gradually increased, the one and the another being carried out such that the reduction of thickness of the animal pieces corresponds to that normally occurring when making so-called schnitzels, for instance veal collaps.

A further advantage of the invention is that it allows with a simple and consequently relatively cheap and reliable machine to do other butcher's work with only unimportant additional or auxiliary parts.

Consequently it is a further elaboration of the invention that auxiliary members such as a needle bed or a set of knives can be attached to the press member as well as adapted support plates to the other side.

For rendering more tender it is not necessary that the pins

0045999

can intrude into holes in the support plate; when cutting it may be desired to realize a shape of the support plate that is adapted to that of the knives for instance a plane with slits.

By retracting the press member quickly in many case it will be prevented that meat or suchlike material is taken along in upward direction. If necessary a discharge device can be provided.

The stroke length of the press member can be adjusted in a way known per se.

0045999

Claims:

1. Device for mechanical reducing the thickness of animal pieces provided with two members (6, 8) having each a mainly plane surface, said surfaces being movable towards each other and away from each other and a drive (1) for this movement, characterized in that in order to allow a considerable reduction in thickness of the animal pieces without hitting them too fast the drive (1) is a pneumatic one, the forward stroke of which is provided with choke means so that said pneumatic drive exerts an increasing pressing force having a predetermined upper limit

2. Device according to claim 1, characterized in that distance ribs (11) are provided on one of said plane surfaces.

3. Device according to claim 1 or 2, characterized in that in one of said surfaces a mainly plane excavation (10) is made the shape of which corresponds to a desired final shape of an animal piece.

4. Device according to any of the preceding claims, characterized in that at least one (8) of said members is exchangeable.

5. Device according to any of the preceding claims, characterized in that at least one of said mainly plane surface (6, 8) is of plastic material.

6. Device according to any of the preceding claims, characterized in that auxiliary members (12, 13, 14, 15; 16, 17; 18, 19) are present.

7. Device according to claim 6,
   characterized in
   that an auxiliary member is a plate (8, 18) provided
   with shallow excavations (10, 19).

8. Method for treating animal pieces in which an animal
   piece is pressed between two plates (6, 8), in order
   to reduce its thickness, one of said plates being driven
   characterized in
   that the drive (1) is a pneumatic one and that the press
   medium of the pneumatic drive is choked in such a way
   that the pressing force is gradually increased, the one
   and the another being carried out such that the reduction
   of thickness of the animal piece corresponds to that
   normally occurring when making so-called schnitzels,
   for instance veal collops.

FIG.1

FIG.2

FIG.3

11

8

FIG.4

FIG. 5

FIG.6

0045999

Application number

EP 81 20 0895

**EUROPEAN SEARCH REPORT**

European Patent Office

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | A 22 C 7/00 |
| D | US - A - 2 688 151 (KOMARIK) <br><br> * the whole document * <br><br> -- | 1,6,8 | |
| | US - A - 3 648 600 (JACCARD) <br><br> * column 2, line 18 - column 3, line 67; column 4, lines 16-73 * <br><br> -- | 1,3-6, 8 | |
| | DE - A - 2 825 084 (TENNINGER) <br><br> * page 9, line 22 - page 11, line 23; claims 6,7 * <br><br> -- | 1,4-6, 8 | TECHNICAL FIELDS SEARCHED (Int. Cl.³) <br><br> A 22 C |
| | GB - A - 1 502 026 (DCA FOOD INDUSTRIES) <br><br> * page 4, lines 60-68; page 5, lines 26-38 * <br><br> ------- | 7 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family,
· corresponding document

The present search report has been drawn up for all claims

| Place of search | Date of completion of the search | Examiner |
|---|---|---|
| The Hague | 17-11-1981 | DE LAMEILLEURE |

EPO Form 1503.1   06.78